# EUROPEAN PATENT SPECIFICATION

(11) **EP 4 203 144 B1**
(45) Date of publication and mention of the grant of the patent: **09.12.2026**
(21) Application number: 22842410.7
(22) Date of filing: 12.07.2022
(51) Int. Cl.: H01M 10/647, H01M 10/6551, H01M 10/653, H01M 10/613, H01M 50/211, H01M 50/242, H01M 10/6554, H01M 50/209, H01M 50/291, H01M 50/557

(54) **BATTERY MODULE, AND BATTERY PACK INCLUDING THE SAME**
BATTERIEMODUL UND BATTERIEPACK MIT SELBIGEN
MODULE DE BATTERIE ET BLOC-BATTERIE LE COMPRENANT

(30) Priority: 12.07.2021 KR 20210091182; 11.07.2022 KR 20220085314
(43) Date of publication of application: 28.06.2023
(73) Proprietor: LG Energy Solution, Ltd., Seoul 07335 (KR)
(72) Inventor: KIM, Tae Wook, Daejeon 34122 (KR); SEONG, Junyeob, Daejeon 34122 (KR); PARK, Myungki, Daejeon 34122 (KR); JANG, Sunghwan, Daejeon 34122 (KR); JEON, Jongpil, Daejeon 34122 (KR)
(74) Representative: Plasseraud IP
(86) International application number: PCT/KR2022/010088
(87) International publication number: WO 2023/287148

(56) References cited:
- EP-A1- 3 373 384
- EP-A1- 3 748 726
- DE-A1- 102015 110 667
- DE-A1- 102018 213 290
- KR-A- 20190 110 782
- KR-A- 20200 021 608
- KR-A- 20200 131 618
- KR-A- 20210 077 416
- KR-B1- 102 067 710
- US-A1- 2018 062 225

## Description

### [TECHNICAL FIELD]

### Cross Citation with Related Application(s)

This application claims the benefit of Korean Patent Application No. 10-2021-0091182 filed on July 12, 2021 and Korean Patent Application No. 10-2022-0085314 filed on July 11, 2022 in the Korean Intellectual Property Office.

The present disclosure relates to a battery module and a battery pack including same, and more particularly to a battery module having an enhanced cooling efficiency and a battery pack including same.

### [BACKGROUND]

Along with the technology development and increased demand for mobile devices, demand for secondary batteries as energy sources has been increasing rapidly. Accordingly, many researches on the battery capable of meeting various demands are being performed.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

Recently, along with a continuous rise of the necessity for a large-capacity secondary battery structure, including the utilization of the secondary battery as an energy housing source, there is a growing demand for a battery pack of middle- or large-sized module structure which is an assembly of battery modules in which a plurality of secondary batteries are connected in series or in parallel.

Meanwhile, when a plurality of battery cells are connected in series or in parallel to configure a battery pack, it is common to configure a battery module composed of at least one battery cell and then configure a battery pack by using at least one battery module and adding other components. Since the battery cells constituting these middle or large-sized battery modules are composed of chargeable/dischargeable secondary batteries, such a high-output and large-capacity secondary battery generates a large amount of heat in a charge and discharge process.

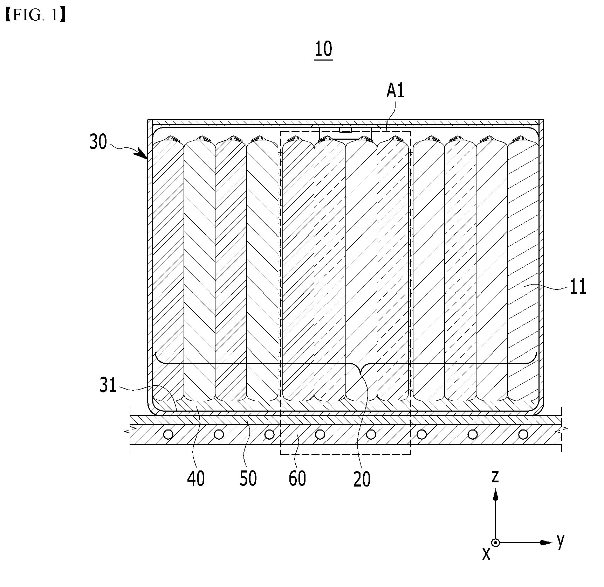

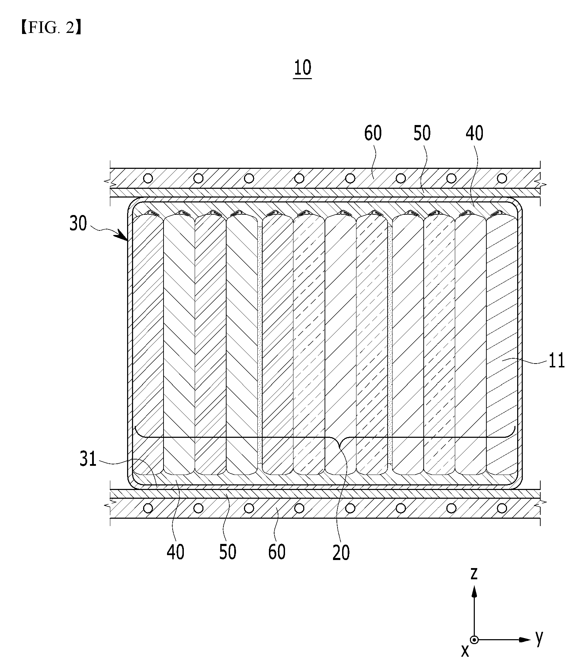

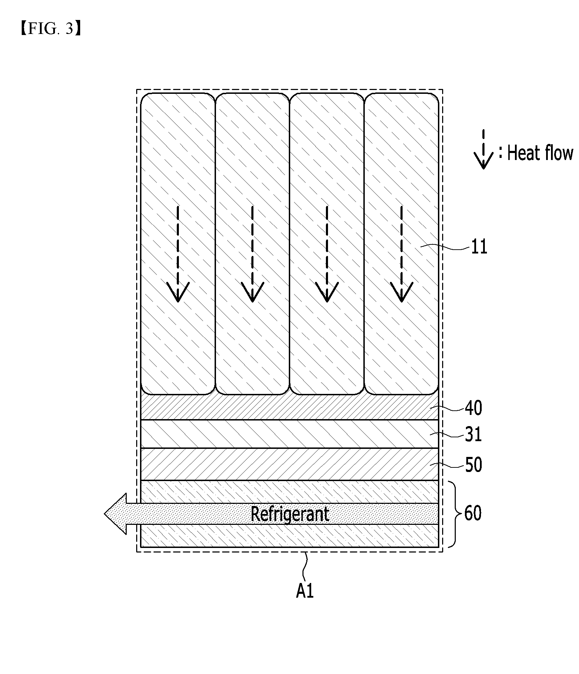

Figs. 1 and 2 are cross-sectional views of a conventional battery module. Fig. 3 is an enlarged view of area A1 of Fig. 1.

Referring to Figs. 1 to 2, since the battery module 10 includes a plurality of battery cells 11 as described above, it generates a large amount of heat during the charging and discharging process. As a cooling means, the battery module 10 may include a thermal conductive resin layer 40 that is located between the battery cell stack 20 and the bottom part 31 of the module frame 30 or between the battery cell stack 20 and the upper cover of the module frame 30. Further, when the battery module 10 is mounted on the pack frame to form a battery pack, the heat transfer member 50 and the heat sink 60 may be sequentially located below or above the battery module 10. The heat transfer member 50 may be a heat dissipation pad, and the heat sink 60 may have a refrigerant flow path formed therein.

In the battery cell 11 housed in the conventional battery module 10, the wing folding surface of the battery cell 11 is located toward the upper cover of the module frame 30, and the cooling surface of the battery cell 11 is located toward the bottom part 31 of the module frame 30. Since the area of the wing folding surface is smaller than that of the cooling surface, it may a larger thermal resistance than that of the cooling surface. Therefore, heat generated during charging and discharging of the battery module 10 can mainly move toward the cooling surface. Referring to Fig. 3, along the direction in which the heat generated from the battery cell 11 is directed towards the heat sink, the heat sequentially passes through the thermal conductive resin layer 40, the bottom part 31 of the module frame 30, the heat transfer member 50, and the heat sink 60, and transfers to the outside of the battery module 10. In addition, the conventional battery module 10 has complicated heat transfer path as described above, and thus, it is difficult for heat generated from the battery cell 11 to be effectively transferred to the outside.

Therefore, with the trend of continuing demands such increased capacity for battery modules, there is a substantial need to develop a battery module that can satisfy these various requirements while enhancing the cooling performance.

Document EP 3 748 726 A1 relates to a battery module capable of effectively dissipating heat generated in a battery cell. Document DE 10 2015 110667 A1 relates to a cell arrangement that allows the use of pocket cells, while still achieving improved cooling with simple expansion.

### [DETAILED DESCRIPTION OF THE INVENTION]

### [Technical Problem]

It is an object of the present disclosure to provide a battery module having an enhanced cooling efficiency and battery life, and a battery pack including the same.

However, the technical problem to be solved by embodiments of the present disclosure is not limited to the above-described problems, and can be variously expanded within the scope of the technical idea included in the present disclosure.

### [Technical Solution]

The present invention is set out in the attached set of claims. According to the present disclosure, there is provided a battery module comprising: a battery cell stack formed by stacking a plurality of battery cells including a cooling surface and a wing folding surface; a module frame that houses the battery cell stack; an upper heat sink located in the upper part of the module frame; and a lower heat sink located in the lower part of the module frame, wherein the plurality of battery cells includes a first battery cell and a second battery cell, wherein the first battery cell is formed such that the cooling surface is located adjacent to the lower heat sink, and wherein the second battery cell is formed such that the cooling surface is located adjacent to the upper heat sink.

The battery cell includes a housing part that houses the electrode assembly, and a sealing part that seals the outer periphery of the electrode assembly, wherein the sealing part includes a first sealing part including a region where the electrode lead is located, and a second sealing part excluding the first sealing part, wherein the second sealing part includes a second surface that is bent at least once after heat-sealing, and wherein one surface of the battery cell including the second surface is the wing folding surface.

The first battery cell and the second battery cell is alternately stacked.

One surface of the second surface is adhered and fixed to the housing part.

The other surface of the second surface may be located while making contact with the module frame.

The battery cell stack may include a first battery cell stack in which the first battery cells are connected in parallel, and a second battery cell stack in which the second battery cells are connected in parallel.

The first battery cell stack and the second battery cell stack may be alternately stacked.

At least two or more battery cells may be connected in parallel in the first battery cell stack and the second battery cell stack.

A compression pad may be located between the battery cells.

The battery cell stack includes a first battery cell stack in which the first battery cells are connected in parallel, and a second battery cell stack in which the second battery cells are connected in parallel, and a compression pad may be located between the first battery cell stack and the second battery cell stack.

The lower plate of the upper heat sink is an upper cover of the module frame, and the upper plate of the lower heat sink may be the bottom part of the module frame.

A thermal conductive resin layer may be located between the battery cell stack and the module frame.

A thermal conductive resin layer may be located between the cooling surface of the battery cell stack and the module frame.

According to another embodiment of the present disclosure, there is provided a battery pack comprising the above-mentioned battery module.

### [Advantageous Effects]

According to embodiments, by changing the direction in which the battery cells are arranged, the cooling performance and life of the battery module can be improved.

The effects of the present disclosure are not limited to the effects mentioned above and additional other effects not described above will be clearly understood from the description of the appended claims by those skilled in the art.

### [BRIEF DESCRIPTION OF THE DRAWINGS]

Figs. 1 and 2 are cross-sectional views of a conventional battery module;
Fig. 3 is an enlarged view of area A1 of Fig. 1;
Fig. 4 is a perspective view showing a battery module according to an embodiment of the present disclosure;
Fig. 5 is an exploded perspective view of the battery module of Fig. 4;
Fig. 6 is a diagram showing an exploded state of an assembling step of a battery cell according to an embodiment of the present disclosure;
Fig. 7 is a perspective view showing a state in which the battery cell of Fig. 6 is sealed;
Fig. 8 is a diagram showing a process in which the second surface of Fig. 7 is formed;
Fig. 9 is a diagram showing a state in which the second surface of Fig. 7 is completed;
Fig. 10 is a cross-sectional view showing a part of a cross section of a battery module according to an embodiment of the present disclosure taken along line B-B' of Fig. 4;
Fig. 11 is a diagram showing a modification of Fig. 10;
Fig. 12 is a view showing a section A1 of Fig. 11;
Fig. 13 is a cross-sectional view showing a part of a cross section of a battery module according to another embodiment of the present disclosure taken along line B-B' of Fig. 4;
Fig. 14 is a cross-sectional view showing a part of a cross section of a battery module according to another embodiment of the present disclosure taken along line B-B' of Fig. 4; and
Fig. 15 is a cross-sectional view showing a part of a cross section of a battery module according to another embodiment of the present disclosure taken along line B-B' of Fig. 4.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated in the drawings. **In** the drawings, the thickness of layers, regions, etc. are exaggerated for clarity. **In** the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed "on" or "above" the reference portion toward the opposite direction of gravity.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

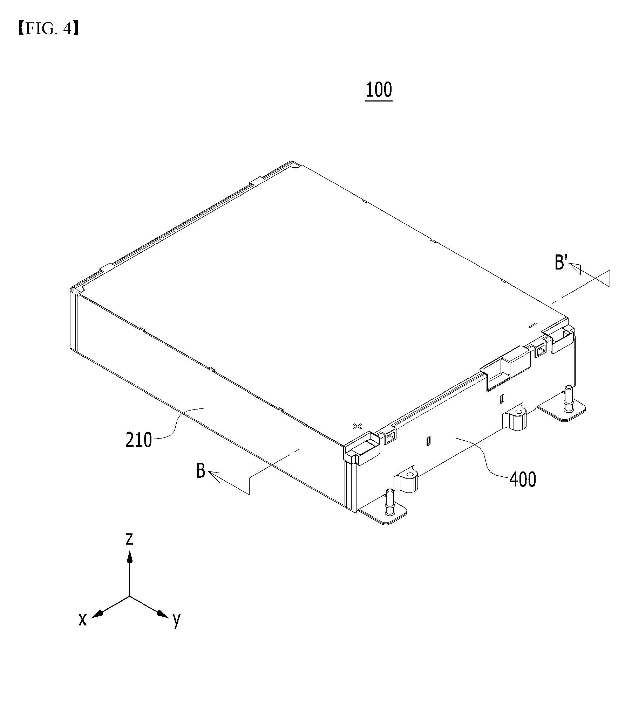

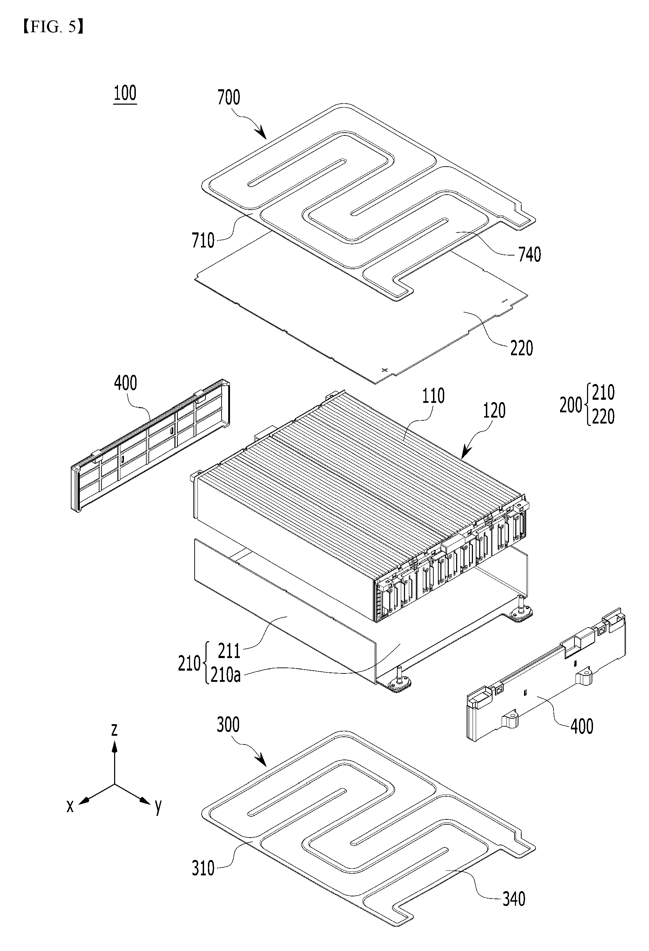

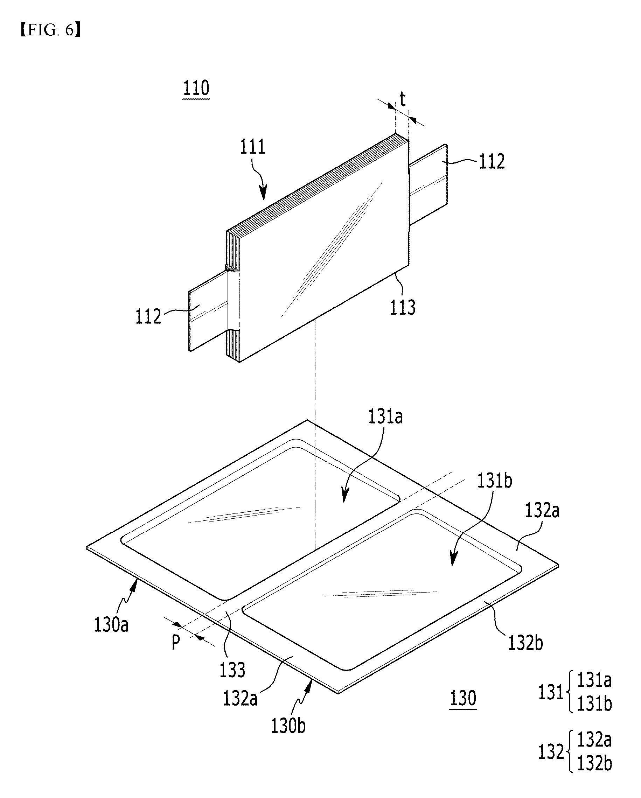

Fig. 4 is a perspective view showing a battery module according to an embodiment of the present disclosure. Fig. 5 is an exploded perspective view of the battery module of Fig. 4. Fig. 6 is a diagram showing an exploded state of an assembling step of a battery cell according to an embodiment of the present disclosure.

Referring to Figs. 4 to 6, the battery module 100 according to an embodiment of the present invention includes a battery cell stack 120 in which a plurality of battery cells 110 are stacked, a module frame 200 that houses the battery cell stack 120, a lower heat sink 300 located below the bottom part 210a of the module frame 200, and an upper heat sink 700 located in the upper cover 220 of the module frame 200. The bottom part 210a of the module frame 200 constitutes an upper plate of the lower heat sink 300, and the recessed part 340 and the bottom part 210a of the lower heat sink 300 form a refrigerant flow path. The upper cover 220 constitutes the lower plate of the upper heat sink 700, and the recessed part 740 of the upper heat sink 700 and the upper cover 220 form a refrigerant flow path.

First, the battery cell 110 may be a pouch-type battery cell. Such a pouch-type battery cell may be formed by housing the electrode assembly in a pouch case of a laminated sheet containing a resin layer and a metal layer, and then heat-sealing a sealing portion of the pouch case. At this time, the battery cell 110 may be formed in a rectangular sheet-like structure.

Such a battery cell 110 may be formed in plural numbers, and the plurality of battery cells 110 can be stacked so as to be electrically connected to each other, thereby forming a battery cell stack 120. Particularly, a plurality of battery cells 110 may be stacked in a direction parallel to the x-axis as shown in Fig. 5.

The module frame 200 for housing the battery cell stack 120 may include an upper cover 220 and a U-shaped frame 210.

The U-shaped frame 210 may include a bottom part 210a and two side surface parts 211 extending upward from both ends of the bottom part 210a. The bottom part 210a may cover the lower surface (-z-axis direction) of the battery cell stack 120, and the side surface part 211 may cover both side surfaces (x-axis direction and -x-axis direction) of the battery cell stack 120.

The upper cover 220 may be formed in a single plate-shaped structure that wraps the lower surface wrapped by the U-shaped frame 210 and the remaining upper surface (z-axis direction) excluding the both side surfaces. The upper cover 220 and the U-shaped frame 210 can be joined by welding or the like in a state in which the corresponding corner portions are in contact with each other, thereby forming a structure that covers the battery cell stack 120 vertically and horizontally. That is, the battery cell stack 120 can be physically protected through the upper cover 220 and the U-shaped frame 210. For this purpose, the upper cover 220 and the U-shaped frame 210 may include a metal material having a predetermined strength.

Meanwhile, although not specifically illustrated, the module frame 200 according to a modification may be a mono frame in the form of a metal plate in which the upper surface, the lower surface, and both side surfaces are integrated. That is, this is not a structure in which the U-shaped frame 210 and the upper cover 220 are coupled with each other, but a structure in which the upper surface, the lower surface, and both side surfaces are integrated by being manufactured by extrusion molding.

The bottom part 210a of the module frame 200 constitutes the upper plate of the lower heat sink 300, and the recessed part 340 of the lower heat sink 300 and the bottom part 210a of the module frame 200 can form a refrigerant flow path.

Specifically, the lower heat sink 300 may be formed in the lower part of the module frame 200. The lower heat sink 300 may be formed while making contact with the bottom part 210a of the module frame 200. The lower heat sink 300 includes a lower plate 310 that forms a skeleton of the lower heat sink 300 and is joined with the bottom part 210a of the module frame 200 and a recessed part 340 that is a path through which refrigerant flows.

The upper part 220 of the module frame 200 constitutes the lower plate of the upper heat sink 700, and the convex part 740 of the upper heat sink 700 and the upper cover 220 may form a refrigerant flow path.

Specifically, the upper heat sink 700 may be formed in the upper part of the module frame 200. The upper heat sink 700 may be formed while making contact with the upper cover 220. The upper heat sink 700 includes an upper plate 710 that forms a skeleton of the upper heat sink 700 and is joined with the upper cover 220 and a convex part 740 that is a path through which refrigerant flows.

The method for manufacturing the recessed part 340 of the lower heat sink 300 and the convex part 740 of the upper heat sink 700 is not particularly limited, but they can be formed by providing a structure recessed and formed with respect to the plate-shaped lower heat sink 300 and upper heat sink 700. As an example, a part of the lower plate 310 may be recessed in the lower direction to form the U-shaped recessed part 340 of which the upper side is opened.

For effective cooling, as shown in Fig. 5, it is preferable that the recessed part 340 and the convex part 740 are formed over the entire area corresponding to the bottom part 210a of the module frame 200 and the upper cover 220. For this purpose, the recessed part 340 and the convex part 740 may be bent at least once to extend from one side to the other. In particular, in order to form the recessed part 340 and the convex part 740 over the entire area corresponding to the bottom part 210a and the upper cover 220 of the module frame 200, the recessed part 340 and the convex part 740 are preferably bent several times. As the refrigerant moves from the start point to the end point of the refrigerant flow path formed over the entire region corresponding to the bottom part 210a and the upper cover 220 of the module frame 200, efficient cooling can be performed over the entire region of the battery cell stack 120, and thus the cooling performance can be further improved.

The end plate 400 is located on the open first side (y-axis direction) and the second side (-y-axis direction) of the module frame 200, so that it can be formed so as to cover the battery cell stack 120. Such an end plate 400 can physically protect the battery cell stack 120 and other electrical components from external impact.

Meanwhile, although not specifically illustrated, a busbar frame on which the busbar is mounted and an insulating cover for electrical insulation, etc. may be located between the battery cell stack 120 and the end plate 400.

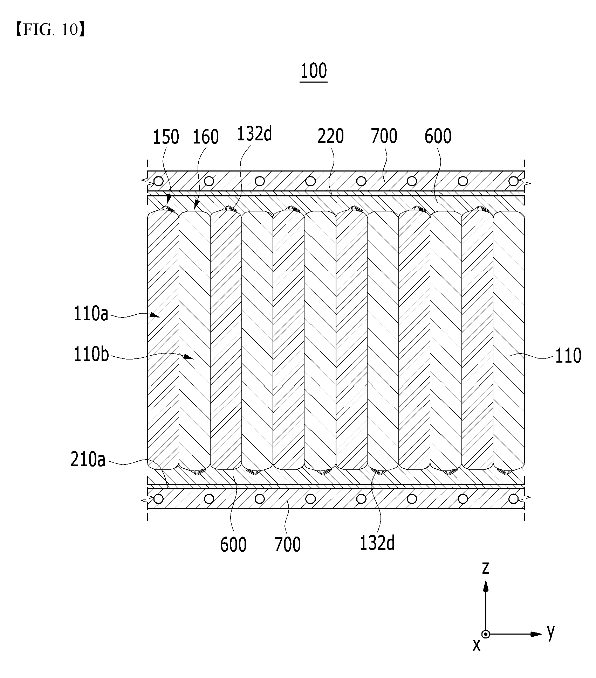

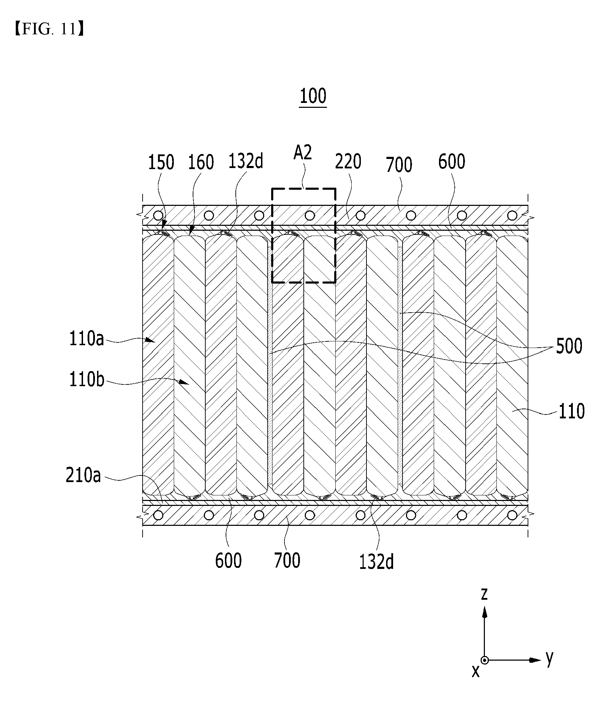

A thermal conductive resin layer 600 (see Figs. 10 and 11) including a thermal conductive resin may be located between the bottom part 210a of the module frame 200 and the battery cell stack 120, and between the upper cover 220 of the module frame 200 and the battery cell stack 120. The thermal conductive resin layer 600 can be formed by applying a thermal conductive resin to the bottom part 210a and the upper cover 220 and then curing the applied thermal conductive resin.

The thermal conductive resin may include a thermal conductive adhesive material, and specifically, may include at least one of a silicone material, a urethane material, and an acrylic material. The thermal conductive resin is a liquid during application but is cured after application, so that it can perform the role of fixing one or more battery cells 110 constituting the battery cell stack 120. Further, since the thermal conductive resin has excellent heat transfer properties, it is possible to quickly transfer the heat generated in the battery module 110 to the lower side and upper side of the battery module 100.

Next, the wing folding surface and the cooling surface of the battery cell will be described in more detail with reference to Fig. 6.

The battery cell 110 inserted so as to be stacked in the battery module includes an electrode assembly 111 including a cathode, an anode and a separator, and a pouch case 130 in which the housing part 131 for housing the electrode assembly 111 is formed.

The electrode assembly 111 may be a stacked type electrode assembly 111 in which a plurality of cathodes and anodes cut in units of a predetermined size are sequentially stacked with a separator interposed therebetween. However, it may be a winding type assembly in which a structure in which a cathode and an anode are stacked with a separator interposed therebetween is wound up, without being limited thereto.

The electrode lead 112 can be electrically connected to the electrode assembly 111. Such electrode leads 112 may be provided in pairs. A portion of the pair of electrode leads 112 may protrude to the outside of the pouch case 130 in the front and rear directions (both ends in the longitudinal direction of the electrode assembly) of the pouch case 130, respectively. The configuration of the battery cell 110 described above is an example, and the shape of the battery cell 110 can be modified in a various manner.

The pouch case 130 includes a housing part 131, a sealing part 132, and a folding part 133. The pouch case 130 may include a first region 130a and a second region 130b corresponding to each other, and may be made of a sheet-like base material that includes a first housing part 131a located in the first region 130a, a second housing part 131b located in the second region 130b, and a folding part 133 located between the first housing part 131a and the second housing part 131b.

The first region 130a and the second region 130b may be divided by the folding part 133 of the pouch case 130.

When manufacturing the pouch case 130, the housing part 131 for housing the electrode assembly 111 may be formed in at least one of the first region 130a and the second region 130b through forming. The housing part 131 includes a first housing part 131a which may be located in the first region 130a and a second housing part 131b which may be located in the second region 130b. A portion of the electrode assembly 111 is incorporated in each of the first housing part 310a and the second housing part 131b, and the first housing part 131a and the second housing part 131b can be folded to face each other with the folding part 133 interposed therebetween, thereby being housed so as to wrap the electrode assembly 111.

After the housing part 131 is formed, the folding part 133 of the pouch case 130 can be bent 180 degrees to cover the housing part 131, thereby completing the structure of the pouch case 130. The folding part 133 may be a portion that bends the pouch case 130. The first region 130a and the second region 130b may be in contact with each other while being folded along the folding part 133.

The electrode assembly 111 has a shape where planar shape has four sides, and the folding part 133 may be located at a portion corresponding to one of the four sides. The folding part 133 is in close contact with the side surface 113 of the electrode assembly 111, and the sheet-shaped base material is folded at both edges of the folding part 133, whereby the first housing part 131a and the second housing part 131b can be folded so as to face each other. Therefore, the width P of the folding part 133 may be the same as the thickness t of the electrode assembly 111. On three sides excluding the sides corresponding to the folding part 133, the edges of the first housing part 131a and the second housing part 131b are joined to each other to form a sealing part 132 that is sealed. The sealing part 132 is sealed by a method such as heat sealing.

More specifically, the sheet-like base material of the pouch case 130 can be made of a laminated sheet including a metal layer and a resin layer. In particular, the laminated sheet may be an aluminum laminate sheet. The sheet-like base material includes a core made of a metal layer, a heat-sealing layer formed on one surface of the core, and an insulating film formed on the other surface of the core. The heat-sealing layer acts as an adhesive layer using a polymer resin, such as modified polypropylene, for example, CPP (Casted Polypropylene), and the insulating film may be formed of a resin material such as nylon or polyethylene terephthalate (PET). However, here, the structure and material of the pouch case are not limited. In the sealing part 132, the heat-sealing layer of the first housing part 131a and the second housing part 131b comes into contact with each other, and the pouch case 130 is sealed by performing a heat sealing process in a state in which they are in contact with each other.

The sealing part 132 of the pouch case 130 means a region that is heat-sealed to seal the pouch case 130. The sealing part 132 may be formed of three surfaces in each of the first region 130a and the second region 130b, and three surfaces of the sealing part 132 may be divided into a first sealing part 132a and a second sealing part 132b.

Specifically, the first sealing part 132a may be a sealing part 132 including a region in which the electrode lead 112 is located. That is, the first sealing part 132a may be the sealing part 132 located in the x-axis direction and the -x-axis direction of Fig. 6.

The second sealing part 132b may be a sealing part 132 that does not include the electrode lead 112. That is, the second sealing part 132b means the sealing part 132 excluding the first sealing part 132a, and may be the sealing part 132 facing the folding part 133. The second sealing part 132b may be a sealing part 132 located in the y-axis direction and the -y-axis direction of Fig. 6.

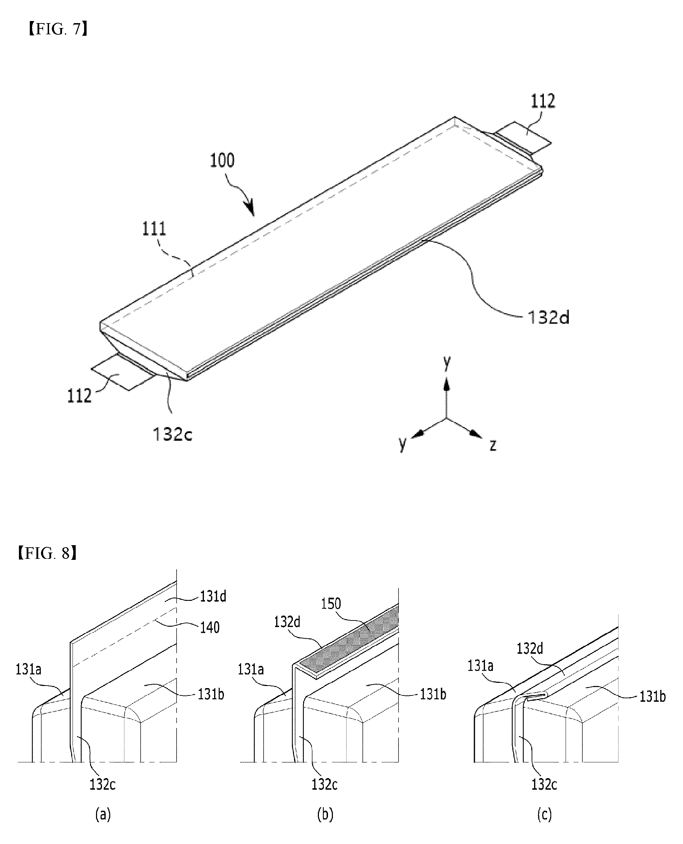

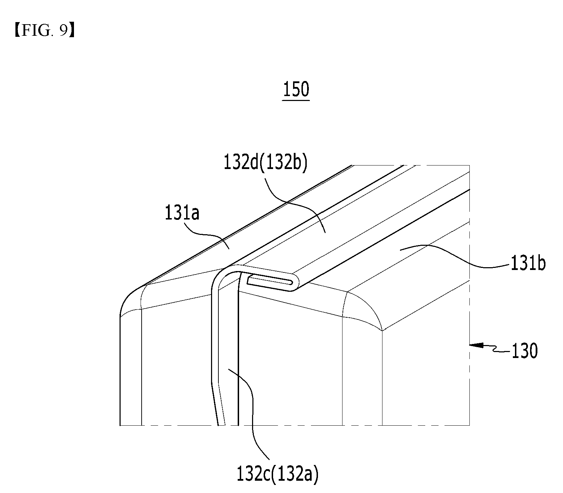

Fig. 7 is a perspective view showing a state in which the battery cell of Fig. 6 is sealed. Fig. 8 is a diagram showing a process in which the second surface of Fig. 7 is formed. Fig. 9 is a diagram showing a state in which the second surface of Fig. 7 is completed.

Referring to Figs. 6 and 7, the sealing part 132 of the pouch case 130 of Fig. 6 may be sealed to form the completed battery cell 100.

Specifically, when the first region 130a and the second region 130b are folded by the folding part 133 and then the sealing parts 132 located in each of the first region 130a and the second region 130b are sealed, the sealing part 132 may be heat-sealed to form one surface. **In** this case, one surface formed by heat-sealing the first sealing part 132a of the first region 130a and the second region 130b may be the first surface 132c, and one surface formed by heat-sealing the second sealing part 132b of the first region 130a and the second region 130b may be the second surface 132d.

Next, the second surface 132d will be described in more detail with reference to Figs. 7 to 9.

The second sealing part 132b of the first region 130a and the second sealing part 132b of the second region 130b may be heat-sealed to each other to form one second surface 132d.

Referring to Figs. 8(a) and 8(b), the second surface 132d is a single long surface and is folded based on the bending line 140 of Fig. 8(a). Here, the bending line 140 may be any line that servs as a reference for folding the second surface 132d. The bending line 140 may be located in the center of the second surface 132d, but is not limited thereto, and can be located in any region as long as the second surface 132d can be bent. In addition, although the bending line 140 is formed in one number in this figure, it is not limited thereto, and may be formed in one or more numbers. In this case, the second surface 132d is folded at least once. That is, the second surface 132d is bent at least once.

Referring to Figs. 8(c) and 9, the second surface 132d folded based on the bending line 140 is adhered and fixed to the second housing part 131b. An adhesive member 150 is provided between the second surface 132d and the second housing part 131b, so that the second surface 132d and the second housing part 131b can be adhered and fixed.

Additionally, although not disclosed in this figure, the adhesive member 150 may also be located between the second surfaces 132d that are folded based on the bending line 140. That is, the adhesive member 150 is also interposed between the second surfaces 132d that are folded based on the bending line 140, so that the second surfaces 132d facing each other cannot be separated from each other.

In the case of this figure, the second surface 132d is adhered and fixed to the second housing part 131b in the folded direction with respect to the bending line 140, and when the second surface 132d is folded in a direction opposite to that of this figure, it may be adhered and fixed to the first housing part 131a.

Referring to Fig. 9, the second surface 132d of the battery cell 110 of the present embodiment is adhered and fixed to the second housing part 131b. In this case, one surface of the battery cell 110 including the second surface 132d may be defined as the wing folding surface 150.

Fig. 10 is a cross-sectional view showing a part of a cross section of a battery module according to an embodiment of the present disclosure taken along line B-B' of Fig. 4.

Referring to Fig. 10, the battery module 100 according to an embodiment of the present disclosure includes a battery cell stack 120 in which a plurality of battery cells 110 including a wing folding surface 150 and a cooling surface 160 are stacked, a module frame 200 for housing the battery cell stack 120, a lower heat sink 300 and an upper heat sink 700.

The wing folding surface 150 is one surface of the battery cell 110 including the second surface as described above, and the cooling surface 160 may be a surface located opposite to the wing folding surface 150. That is, the cooling surface 160 is one surface of the battery cell 110 that does not include the second surface, and the cooling surface 160 may be a surface corresponding to the folding part 133 of the pouch case 130.

The plurality of battery cells 110 includes a first battery cell 110a and a second battery cell 110b.

The first battery cell 110a may be a battery cell 110 in which the wing folding surface 150 is located adjacent to the upper heat sink 700. The first battery cell 110a may be a battery cell 110 in which the cooling surface 160 is located adjacent to the lower heat sink 300. Since the wing folding surface 150 includes a second surface 132d on which the second sealing part is folded at least once or more, it is reduced in the region that facilitates heat transfer to the outside and is not easy to cool, as compared to the cooling surface 160 that does not include the second surface 132d. Therefore, the heat generated from the battery cell 110 during charging and discharging of the battery moves in the direction of the cooling surface 160, which has a relatively larger area than the wing folding surface 150, and it sequentially passes through the cooling surface 160 , the thermal conductive resin layer 600, the bottom part 210a of the module frame 200 and the lower heat sink 300 and is transferred to the outside of the battery module 100.

The second battery cell 110b may be a battery cell 110 in which the wing folding surface 150 is located adjacent to the lower heat sink 300. The second battery cell 110b may be a battery cell 110 in which a cooling surface 160 is located adjacent to the upper heat sink 700. Heat generated from the battery cell 110 during charging and discharging of the battery moves in the direction of the cooling surface 160, and it sequentially passes the cooling surface 160, the thermal conductive resin layer 600, the upper cover 220 of the module frame 200, and the upper heat sink 700 and is transferred to the outside of the battery module 100.

The first battery cell 110a and the second battery cell 110b may be alternately stacked in the module frame 200, respectively. The battery cell stack may have a structure in which the first battery cells 110a and the second battery cells 110b are alternately stacked.

Because the first battery cell 110a and the second battery cell 110b are alternately stacked and located, heat transferred from the first battery cell 110a and the second battery cell 110b to the outside of the battery module 100 can be dispersed and uniformly transferred to the upper part and lower part of the battery module 100, respectively. That is, since heat is not intensively transferred to only one surface of the module frame 220, the cooling efficiency can be enhanced, and the life characteristics of the battery can also be improved due to the enhancement of the cooling efficiency.

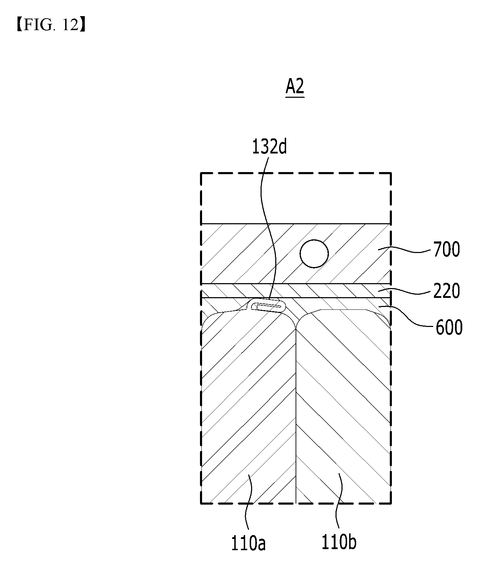

Fig. 11 is a diagram showing a modification of Fig. 10. Fig. 12 is a view showing a section A1 of Fig. 11. The battery module described in Figs. 11 and 12 is a modification of the one embodiment of the present disclosure shown in Fig. 10, and detailed descriptions of the same configurations as those described above will be omitted.

Referring to Figs. 11 and 12, the first battery cell 110a and the second battery cell 110b according to the present embodiment are alternately stacked. In this case, the wing folding surface 150 of the first battery cell 110b and the wing folding surface 150 of the second battery cell 110a may be located while making contact with the module frame 200, respectively. Specifically, the wing folding surface 150 of the first battery cell 110a and the wing folding surface 150 of the second battery cell 110b may be located while making contact with the upper cover 220 and the bottom part 210a of the module frame 200, respectively.

The second surface 132d of the wing folding surface 150 may be in contact with the module frame 200. The second surface 132d of the wing folding surface 150 may be in contact with the upper cover 220 and the bottom part 210b of the module frame 200. More specifically, the first battery cell 110a and the second battery cell 110b may be arranged such that one surface of the second surface 132d folded based on the bending line is adhered to the housing part of the pouch case, and the other surface of the second surface 132d that is not adhered to the housing part is in contact with the upper cover 220 and the bottom part 210a of the module frame 200.

That is, among the second surfaces 132d constituting the wing folding surface 150 of the first battery cell 110a, the other surface not in contact with the housing part may be located while making contact with the upper cover 220 of the module frame 200, and among the second surfaces 132d constituting the wing folding surface 150 of the second battery cell 110b, the other surface that is not in contact with the housing part is located while making contact with the upper cover 220 of the module frame 200.

This figure is illustrative, and the arrangement of the first battery cell 110a and the second battery cell 110b according to the modification is not limited thereto.

In the case of the wing folding surface 150, as described above, since the second surface 132d is formed in a state of being folded at least once or more, heat transfer to the outside is not easy as compared to the cooling surface 160. However, even in such a case, the second surface 132d folded based on the bending line is adhered to the housing part to be placed flat, and then brought into contact with the module frame 200, so that the heat generated in the battery cell 110 can be more efficiently discharged to the outside even on the wing folding surface 150. Therefore, the cooling efficiency of the battery cell 110 can be further enhanced, and thus the safety of the battery module 100 can be improved. In addition, since the distance between the upper cover 220 and the bottom part 210a of the module frame 200 and the battery cell 110 is also reduced as compared to the conventional one, the energy density of the battery module 100 can be enhanced.

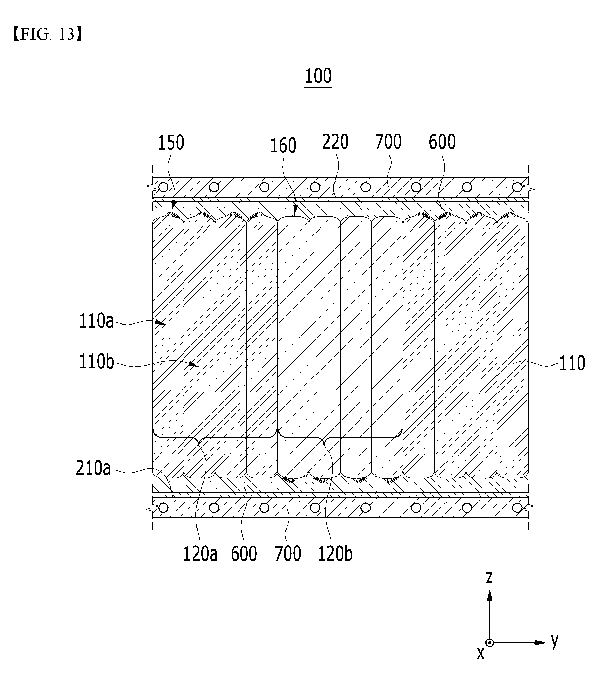

Fig. 13 is a cross-sectional view showing a part of a cross section of a battery module according to another embodiment of the present disclosure taken along line B-B' of Fig. 4.

The battery module according to another embodiment of the present disclosure may be a modification of the battery module according to one embodiment of the present disclosure shown in Fig. 7. Therefore, in the following, only the parts that are different from Fig. 7 will be described in detail.

Referring to Fig. 13, the battery module 100 according to another embodiment of the present disclosure may include a first battery cell stack 120a to which the first battery cells 110a are connected in parallel, and a second battery cell stack 120b to which the second battery cells 110b are connected in parallel.

At least two or more battery cells 110 may be connected in parallel in the first battery cell stack 120a and the second battery cell 110b. At least two first battery cells 110a may be connected in parallel in the first battery cell stack 120a, and at least two second battery cells 110b may be connected in parallel in the second battery cell stack 120b.

The first battery cell stack 120a and the second battery cell stack 120b may be alternately stacked in the module frame 200, respectively. The battery cell stack may have a structure in which the first battery cell stack 120a and the second battery cell stack 120b are alternately stacked.

Alternately stacking the first battery cell stack 120a and the second battery cell stack 120b can house the battery cell 110 in the module frame 200 more easily than alternately stacking the first battery cell 110a and the second battery cell 120a, respectively, so that the battery cell 110 can be housed in the module frame 200, thereby increasing the efficiency of the battery manufacturing process.

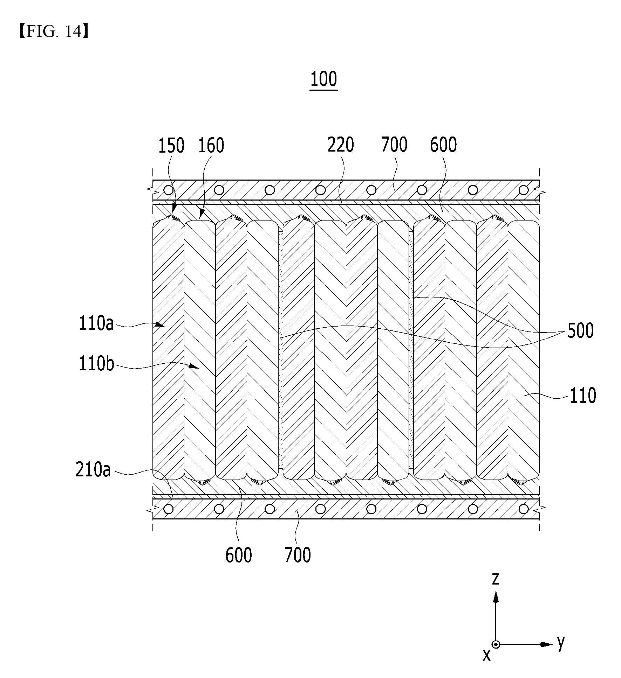

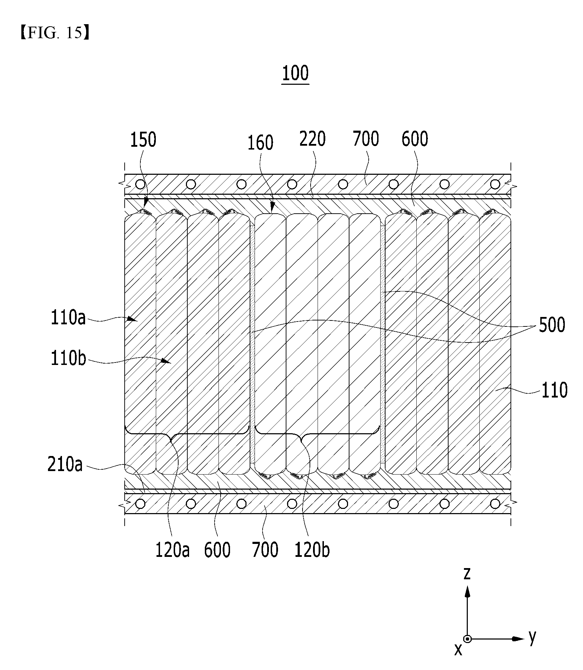

Fig. 14 is a cross-sectional view showing a part of a cross section of a battery module according to an embodiment of the present disclosure taken along line B-B' of Fig. 4. Fig. 15 is a cross-sectional view showing a part of a cross section of a battery module according to another embodiment of the present disclosure taken along line B-B' of Fig. 4.

Referring to Figs. 14 and 15, a compression pad 500 may be located between the plurality of battery cells 110. The compression pad 500 can absorb the swelling of the battery cells 110 to secure the durability inside the battery module 100. The plurality of battery cells 110 can be arranged in a direction facing each other with respect to the compression pad 500.

Although not illustrated in this figure, the compression pad 500 may also be located between the outermost battery cell 110 and the module frame 200 included in the battery cell stack. In this case, the expansion force applied to the module frame 200 by the swelling of the outermost battery cell 110 of the battery cell stack can be absorbed. Therefore, the force applied to the battery cell 110 is reduced due to the expansion force, whereby the risk of breaking the pouch case of the battery cell 110 is reduced, and the safety of the battery module 100 can be improved.

The above-mentioned battery module or the battery pack including the same can be applied to various devices. Such a device can be applied to a vehicle means such as an electric bicycle, an electric vehicle, or a hybrid vehicle, but the present disclosure is not limited thereto, and is applicable to various devices that can use a battery module or a battery pack including the same.

Although preferred embodiments of the present disclosure have been described in detail above, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

100: battery module
110: battery cell
110a: first battery cell
110b: second battery cell
120: battery cell stack
120a: first battery cell stack
120b: second battery cell stack
130: pouch case
131: housing part
132: sealing part
132a: first sealing part
132b: second sealing part
132c: first surface
132d: second surface
133: folding part
150: wing folding surface
160: cooling surface
200: module frame
210a: bottom part
220: upper cover
300: lower heat sink
700: upper heat sink

## Claims

1. A battery module (100) comprising:
a battery cell stack (120) formed by stacking a plurality of battery cells (110) including a cooling surface (160) and a wing folding surface (150);
a module frame (200) that houses the battery cell stack (120);
an upper heat sink (700) located in the upper part of the module frame (200); and
a lower heat sink (300) located in the lower part of the module frame (200),
wherein the plurality of battery cells (110) includes a first battery cell (110a) and a second battery cell (110b),
wherein the first battery cell (110a) is formed such that the cooling surface (160) is located adjacent to the lower heat sink (300),
wherein the second battery cell (110b) is formed such that the cooling surface (160) is located adjacent to the upper heat sink (700);
wherein the first battery cell (110a) and the second battery cell (110b) are alternately stacked,
wherein each of the first battery cell (110a) and the second battery cells (110b) comprises:
a pouch case (130) comprising a housing part (131), a sealing part (132) and a folding part (133), wherein the housing part (131) includes a first housing part (131a) and a second housing part (132b), wherein the sealing part (132) is a region that is heat-sealed to seal the pouch case (130),
wherein the electrode assembly (111) is housed in the first housing part (131a) and the second housing part (131b), and wherein the sealing part (132) seals the edges of the first housing part (131a) and the second housing part (132b) joined to each other
wherein the sealing part (132) includes a first sealing part (132a) including a region where an electrode lead (112) is located, and a second sealing part (132b) excluding the first sealing part (132a),
wherein the second sealing part (132b) includes a second surface (132d) that is folded at least once after heat-sealing,
wherein one surface of the battery cell including the second surface (132d) is the wing folding surface (150);
wherein one surface of the second surface (132d) folded based on a bending line (140) is adhered and fixed to the housing part (131) and the other surface of the second surface (132d) is not adhered to the housing part (131).

2. The battery module according to claim 1 wherein:
the other surface of the second surface (132d) is located while making contact with the module frame.

3. The battery module (100) according to claim 1 comprising:
a first battery cell stack (120a) in which the first battery cells (110a) are connected in parallel, and a second battery cell stack (120b) in which the second battery cells (110b) are connected in parallel.

4. The battery module (100) according to claim 3 wherein:
the first battery cell stack (120a) and the second battery cell stack (120b) are alternately stacked.

5. The battery module (100) according to claim 3 wherein:
at least two or more battery cells (110) are connected in parallel in the first battery cell stack (120a) and the second battery cell stack (120b).

6. The battery module (100) according to claim 1 wherein:
a compression pad (500) is located between the battery cells (110).

7. The battery module (100) according to claim 1 comprising:
a first battery cell stack (120a) in which the first battery cells (110a) are connected in parallel, and a second battery cell stack (120b) in which the second battery cells (110b) are connected in parallel, and
a compression pad (500) is located between the first battery cell stack (120a) and the second battery cell stack (120b).

8. The battery module (100) according to claim 1 wherein:
a lower plate of the upper heat sink (700) is an upper cover (220) of the module frame (200), and
an upper plate of the lower heat sink (300) is the bottom part (210a) of the module frame (200).

9. The battery module (100) according to claim 1 wherein:
a thermal conductive resin layer (600) is located between the battery cell stack (120) and the module frame (200).

10. The battery module according to claim 9 wherein:
a thermal conductive resin layer is located between the cooling surface of the battery cell stack and the module frame.

11. A battery pack comprising the battery module (100) as set forth in claim 1.

## Patentansprüche

1. Batteriemodul (100), enthaltend
einen Batteriezellenstapel (120), der durch Stapeln einer Vielzahl von Batteriezellen (110) gebildet wird, die eine Kühlfläche (160) und eine Flügelfaltfläche (150) aufweisen;
einen Modulrahmen (200), der den Batteriezellenstapel (120) aufnimmt;
einen oberen Kühlkörper (700), der sich im oberen Bereich des Modulrahmens (200) befindet; und
einen unteren Kühlkörper (300), der sich im unteren Bereich des Modulrahmens (200) befindet,
wobei die Vielzahl von Batteriezellen (110) eine erste Batteriezelle (110a) und eine zweite Batteriezelle (110b) umfasst,
wobei die erste Batteriezelle (110a) so ausgebildet ist, dass sich die Kühlfläche (160) angrenzend an den unteren Kühlkörper (300) befindet,
wobei die zweite Batteriezelle (110b) so ausgebildet ist, dass sich die Kühlfläche (160) angrenzend an den oberen Kühlkörper (700) befindet,
wobei die erste Batteriezelle (110a) und die zweite Batteriezelle (110b) abwechselnd gestapelt sind,
wobei jede der ersten Batteriezelle (110a) und der zweiten Batteriezelle (110b) Folgendes aufweist: ein Pouch-Gehäuse (130) mit einem Aufnahmeabschnitt (131), einem Dichtungsabschnitt (132) und einem Faltabschnitt (133), wobei der Aufnahmeabschnitt (131) einen ersten Aufnahmeabschnitt (131a) und einen zweiten Aufnahmeabschnitt (132b) umfasst, wobei der Dichtungsabschnitt (132) ein Bereich ist, der wärmeversiegelt ist, um das Pouch-Gehäuse (130) abzudichten, wobei die Elektrodenanordnung (111) in dem ersten Aufnahmeabschnitt (131a) und dem zweiten Aufnahmeabschnitt (131b) aufgenommen ist, und wobei der Dichtungsabschnitt (132) die Ränder des ersten Aufnahmeabschnitts (131a) und des zweiten Aufnahmeabschnitts (132b), die miteinander verbunden sind, abdichtet,
wobei der Dichtungsabschnitt (132) einen ersten Dichtungsabschnitt (132a), der einen Bereich aufweist, in dem sich ein Elektrodenleiter (112) befindet, und einen zweiten Dichtungsabschnitt (132b) unter Ausschluss des ersten Dichtungsabschnitts (132a) umfasst,
wobei der zweite Dichtungsabschnitt (132b) eine zweite Fläche (132d) aufweist, die nach dem Wärmeversiegeln mindestens einmal gefaltet wird,
wobei eine Fläche der Batteriezelle, die die zweite Fläche (132d) aufweist, die Flügelfaltfläche (150) ist;
wobei eine Seite der zweiten Fläche (132d), die basierend auf einer Biegelinie (140) gefaltet ist, an dem Aufnahmeabschnitt (131) angeklebt und fixiert ist und die andere Seite der zweiten Fläche (132d) nicht an dem Aufnahmeabschnitt (131) angeklebt ist.

2. Batteriemodul nach Anspruch 1, wobei
die andere Seite der zweiten Fläche (132d) so angeordnet ist, dass sie mit dem Modulrahmen in Kontakt steht.

3. Batteriemodul (100) nach Anspruch 1, enthaltend
einen ersten Batteriezellenstapel (120a), in dem die ersten Batteriezellen (110a) parallel geschaltet sind, und einen zweiten Batteriezellenstapel (120b), in dem die zweiten Batteriezellen (110b) parallel geschaltet sind.

4. Batteriemodul (100) nach Anspruch 3, wobei
der erste Batteriezellenstapel (120a) und der zweite Batteriezellenstapel (120b) abwechselnd gestapelt sind.

5. Batteriemodul (100) nach Anspruch 3, wobei
mindestens zwei oder mehr Batteriezellen (110) in dem ersten Batteriezellenstapel (120a) und dem zweiten Batteriezellenstapel (120b) parallel geschaltet sind.

6. Batteriemodul (100) nach Anspruch 1, wobei
zwischen den Batteriezellen (110) ein Kompressionspad (500) angeordnet ist.

7. Batteriemodul (100) nach Anspruch 1, enthaltend
einen ersten Batteriezellenstapel (120a), in dem die ersten Batteriezellen (110a) parallel geschaltet sind, und einen zweiten Batteriezellenstapel (120b), in dem die zweiten Batteriezellen (110b) parallel geschaltet sind, und
zwischen dem ersten Batteriezellenstapel (120a) und dem zweiten Batteriezellenstapel (120b) ein Kompressionspad (500) angeordnet ist.

8. Batteriemodul (100) nach Anspruch 1, wobei
eine untere Platte des oberen Kühlkörpers (700) eine obere Abdeckung (220) des Modulrahmens (200) bildet, und
eine obere Platte des unteren Kühlkörpers (300) den Bodenabschnitt (210a) des Modulrahmens (200) bildet.

9. Batteriemodul (100) nach Anspruch 1, wobei
zwischen dem Batteriezellenstapel (120) und dem Modulrahmen (200) eine wärmeleitende Harzschicht (600) angeordnet ist.

10. Batteriemodul nach Anspruch 9, wobei
zwischen der Kühlfläche des Batteriezellenstapels und dem Modulrahmen eine wärmeleitende Harzschicht angeordnet ist.

11. Batteriepack, enthaltend das Batteriemodul (100) nach Anspruch 1.

## Revendications

1. Module de batterie (100) comprenant :
un empilement de cellules de batterie (120) formé en empilant une pluralité de cellules de batterie (110) comprenant une surface de refroidissement (160) et une surface de pliage d'aile (150) ;
un cadre de module (200) qui loge l'empilement de cellules de batterie (120) ;
un dissipateur thermique supérieur (700) situé dans la partie supérieure du cadre de module (200) ; et
un dissipateur thermique inférieur (300) situé dans la partie inférieure du cadre de module (200),
dans lequel la pluralité de cellules de batterie (110) comprend une première cellule de batterie (110a) et une deuxième cellule de batterie (110b),
dans lequel la première cellule de batterie (110a) est formée de sorte que la surface de refroidissement (160) soit située adjacente au dissipateur thermique inférieur (300),
dans lequel la deuxième cellule de batterie (110b) est formée de sorte que la surface de refroidissement (160) soit située adjacente au dissipateur thermique supérieur (700),
dans lequel la première cellule de batterie (110a) et la deuxième cellule de batterie (110b) sont empilées de manière alternée,
dans lequel chacune de la première cellule de batterie (110a) et de la deuxième cellule de batterie (110b) comprend : un boîtier en poche (130) comprenant une partie de logement (131), une partie d'étanchéité (132) et une partie de pliage (133), dans lequel la partie de logement (131) comprend une première partie de logement (131a) et une deuxième partie de logement (132b), dans lequel la partie d'étanchéité (132) est une région qui est thermoscellée pour sceller le boîtier en poche (130), dans lequel l'ensemble d'électrodes (111) est logé dans la première partie de logement (131a) et la deuxième partie de logement (131b), et dans lequel la partie d'étanchéité (132) scelle les bords de la première partie de logement (131a) et de la deuxième partie de logement (132b) joints l'un à l'autre,
dans lequel la partie d'étanchéité (132) comprend une première partie d'étanchéité (132a) comprenant une région où est situé un conducteur d'électrode (112), et une deuxième partie d'étanchéité (132b) excluant la première partie d'étanchéité (132a), dans lequel la deuxième partie d'étanchéité (132b) comprend une deuxième surface (132d) qui est pliée au moins une fois après le thermoscellage,
dans lequel une surface de la cellule de batterie comprenant la deuxième surface (132d) est la surface de pliage d'aile (150) ;
dans lequel une surface de la deuxième surface (132d) pliée sur la base d'une ligne de pliage (140) est adhérée et fixée à la partie de logement (131) et l'autre surface de la deuxième surface (132d) n'est pas adhérée à la partie de logement (131).

2. Module de batterie selon la revendication 1, dans lequel :
l'autre surface de la deuxième surface (132d) est située tout en faisant contact avec le cadre de module.

3. Module de batterie (100) selon la revendication 1, comprenant :
un premier empilement de cellules de batterie (120a) dans lequel les premières cellules de batterie (110a) sont connectées en parallèle, et un deuxième empilement de cellules de batterie (120b) dans lequel les deuxièmes cellules de batterie (110b) sont connectées en parallèle.

4. Module de batterie (100) selon la revendication 3, dans lequel :
le premier empilement de cellules de batterie (120a) et le deuxième empilement de cellules de batterie (120b) sont empilés de manière alternée.

5. Module de batterie (100) selon la revendication 3, dans lequel :
au moins deux cellules de batterie (110) ou plus sont connectées en parallèle dans le premier empilement de cellules de batterie (120a) et le deuxième empilement de cellules de batterie (120b).

6. Module de batterie (100) selon la revendication 1, dans lequel :
un patin de compression (500) est situé entre les cellules de batterie (110).

7. Module de batterie (100) selon la revendication 1, comprenant :
un premier empilement de cellules de batterie (120a) dans lequel les premières cellules de batterie (110a) sont connectées en parallèle, et un deuxième empilement de cellules de batterie (120b) dans lequel les deuxièmes cellules de batterie (110b) sont connectées en parallèle, et
un patin de compression (500) est situé entre le premier empilement de cellules de batterie (120a) et le deuxième empilement de cellules de batterie (120b).

8. Module de batterie (100) selon la revendication 1, dans lequel :
une plaque inférieure du dissipateur thermique supérieur (700) est un couvercle supérieur (220) du cadre de module (200), et
une plaque supérieure du dissipateur thermique inférieur (300) est la partie inférieure (210a) du cadre de module (200).

9. Module de batterie (100) selon la revendication 1, dans lequel :
une couche de résine thermiquement conductrice (600) est située entre l'empilement de cellules de batterie (120) et le cadre de module (200).

10. Module de batterie selon la revendication 9, dans lequel :
une couche de résine thermiquement conductrice est située entre la surface de refroidissement de l'empilement de cellules de batterie et le cadre de module.

11. Bloc-batterie comprenant le module de batterie (100) tel qu'énoncé dans la revendication 1.
